Europäisches Patentamt

European Patent Office

Office européen des brevets

(19)

(11) **EP 1 436 711 B1**

(12) **FASCICULE DE BREVET EUROPEEN**

(45) Date de publication et mention
de la délivrance du brevet:
**19.01.2005 Bulletin 2005/03**

(21) Numéro de dépôt: **02785539.4**

(22) Date de dépôt: **11.10.2002**

(51) Int Cl.⁷: **G06F 13/38**, G06F 13/40

(86) Numéro de dépôt international:
**PCT/FR2002/003476**

(87) Numéro de publication internationale:
**WO 2003/034245 (24.04.2003 Gazette 2003/17)**

(54) **DISPOSITIF DE SYNCHRONISATION A CHAUD D'UN RECEPTEUR DE TRAMES ASYNCHRONES**

HEISSSYNCHRONISATIONSEINRICHTUNG FÜR EINEN ASYNCHRONEN RAHMENEMPFÄNGER

HOT SYNCHRONISATION DEVICE FOR AN ASYNCHRONOUS FRAME RECEIVER

(84) Etats contractants désignés:
**DE FR GB IT**

(30) Priorité: **15.10.2001 FR 0113268**

(43) Date de publication de la demande:
**14.07.2004 Bulletin 2004/29**

(73) Titulaire: **STMicroelectronics**
**92120 Montrouge (FR)**

(72) Inventeurs:
• **RUAT, Ludovic**
**13119 St. Savourin (FR)**

• **KINOWSKI, Paul**
**13100 Aix-en-Provence (FR)**
• **CZAJOR, Alexander**
**13320 Bouc Bel Air (FR)**

(74) Mandataire: **Marchand, André**
**OMNIPAT,**
**24 Place des Martyrs de la Résistance**
**13100 Aix-en-Provence (FR)**

(56) Documents cités:
**EP-A- 1 134 666** **US-A- 6 131 134**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Printed by Jouve, 75001 PARIS (FR)

# Description

La présente invention concerne les circuits de transmission de données asynchrones généralement appelés des "UARTs" (Universal Asynchronous Receiver Transceiver), qui permettent d'établir des liaisons multipoint entre un dispositif maître et des dispositifs esclaves par l'intermédiaire d'un bus de données asynchrone.

La présente invention concerne plus particulièrement un récepteur de trames asynchrones du type esclave, et un dispositif de synchronisation d'un tel récepteur de trames asynchrones.

Les données véhiculées par une trame asynchrone prennent généralement la forme de caractères de 10 bits comprenant chacun une chaîne de 8 bits de données précédée d'un bit de "start" (bit de démarrage) et suivie d'un bit de stop. Ces deux bits d'encadrement présentent toujours des valeurs opposées, soit 0 et 1 ou 1 et 0. Il s'ensuit qu'un caractère de données ne peut comprendre une suite de 10 bits de même valeur. Deux trames successives peuvent ainsi être séparées par un intervalle de repos ("idle") durant lequel est émis un mot comprenant 10 bits de même valeur, par exemple des bits à 1.

Lorsqu'un circuit UART tente dé se raccorder "à chaud" sur un bus de données asynchrone ("hot plug") et qu'il n'est pas synchronisé avec ce bus, il doit impérativement détecter l'intervalle de repos avant de détecter le bit start du premier caractère reçu.

Par ailleurs, dans les transmissions de données asynchrones, le récepteur ne reçoit pas le signal d'horloge de l'émetteur, de sorte que les horloges respectives de l'émetteur et du récepteur doivent présenter l'une relativement à l'autre une déviation n'excédant pas une certaine valeur, pour que les données puissent être reçues correctement.

Afin d'augmenter les possibilités de transfert de données asynchrones entre dispositifs présentant des circuits d'horloge peu précis et susceptibles de présenter de fortes dérives d'horloge les uns relativement aux autres, on a récemment développé des protocoles de transmission de données permettant à un récepteur de caler son signal d'horloge sur celui d'un émetteur grâce à l'envoi par ce dernier d'un caractère de synchronisation. De tels protocoles sont par conséquent moins exigeants en ce qui concerne la déviation du signal d'horloge du récepteur relativement à celui de l'émetteur. Dans ce qui suit, on désignera par "signal d'horloge local" le signal d'horloge du récepteur et "signal d'horloge de référence" le signal d'horloge présent dans un caractère de synchronisation.

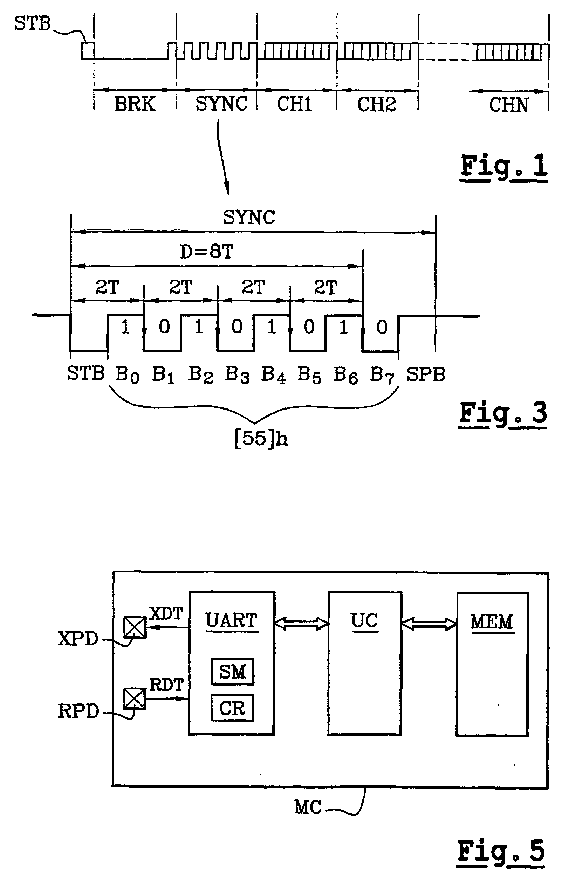

A titre d'exemple, la figure 1 représente une trame asynchrone selon le protocole LIN ("Local Interconnect Network"). Cette trame débute par un caractère d'interruption BRK comprenant une suite de bits à 0 et se terminant par un dernier bit égal à 1 ("extra bit"). La suite de bits à 0 est d'une longueur minimale de 13 bits et est réputée détectée lorsque 11 bits à 0 au moins sont détectés. Ce nombre de 11 bits est choisi par convention et permet de tolérer une déviation de l'ordre de 15% entre le signal d'horloge local et le signal d'horloge de référence. La trame se poursuit par un caractère de synchronisation SYNC suivi d'un ou plusieurs caractères de données CH1, CH2,...CHN. Le premier caractère de données CH1 est couramment utilisé comme champ d'identification du destinataire de la trame.

Toutefois, dans le protocole LIN comme dans d'autres protocoles, l'émission d'un intervalle de repos entre deux trames n'est pas obligatoire. Il s'ensuit que le récepteur peut mettre un temps considérable pour se raccorder à chaud à un bus de données asynchrone puisqu'il doit attendre l'apparition d'un tel intervalle de repos. Il risque ainsi de ne pas prendre en compte des caractères de données qui lui étaient destinés si ceux-ci ont été transmis avant qu'il ne détecte un intervalle de repos.

Ainsi, la présente invention vise un dispositif de synchronisation d'un récepteur de trame qui raccourcisse sensiblement le délai d'établissement d'une connexion à chaud sur un bus de données asynchrone.

Cet objectif est atteint par la prévision d'un récepteur de trames asynchrones débutant par un caractère d'interruption comportant des bits de même valeur en nombre déterminé, comprenant des moyens de connexion à chaud sur un bus de données asynchrone, dans lequel les moyens de connexion à chaud comprennent des moyens de détection d'un caractère d'interruption et des moyens pour quitter un état initial de repos lorsqu'un caractère d'interruption a été détecté, et basculer dans au moins un mode de fonctionnement dans lequel des caractères déterminés d'une trame asynchrone peuvent être détectés par le récepteur de trames.

Selon un mode de réalisation, le récepteur est prévu pour recevoir des trames asynchrones comportant après un caractère d'interruption un caractère de synchronisation, et comprend des moyens pour, après détection d'un caractère d'interruption, activer un circuit de récupération d'horloge recevant en entrée le caractère de synchronisation.

Selon un mode de réalisation, le circuit de récupération d'horloge est agencé pour mesurer une période d'horloge présente dans le caractère de synchronisation.

Selon un mode de réalisation, le circuit de récupération d'horloge est agencé pour mesurer une période d'horloge à compter d'un premier front descendant suivant un caractère d'interruption jusqu'à un dernier front descendant d'un caractère de synchronisation.

Selon un mode de réalisation, les moyens de détection d'un caractère d'interruption comprennent une machine d'état.

La présente invention concerne également un circuit intégré comprenant un récepteur de trames asynchrones selon l'invention.

La présente invention concerne également un microcontrôleur comprenant un récepteur de trames asynchrones selon l'invention.

La présente invention concerne également un procédé de connexion à chaud, sur un bus de données asynchrone, d'un récepteur de trames asynchrones débutant par un caractère d'interruption comportant des bits de même valeur en- nombre déterminé, procédé comprenant les étapes consistant à placer le récepteur de trame dans un état initial de repos, rechercher un caractère d'interruption au moyen du récepteur de trame, et, lorsqu'un caractère d'interruption est détecté, faire basculer le récepteur dans au moins un mode de fonctionnement dans lequel des caractères déterminés d'une trame asynchrone peuvent être détectés par le récepteur.

Selon un mode de réalisation, des trames asynchrones comportent après un caractère d'interruption un caractère de synchronisation, le procédé comprend une étape de récupération d'horloge sur réception d'un caractère de synchronisation.

Selon un mode de réalisation, l'étape de récupération d'horloge comprend la mesure d'une période d'horloge présente dans le caractère de synchronisation.

Selon un mode de réalisation, la mesure d'une période d'horloge est faite à compter d'un premier front descendant suivant un caractère d'interruption jusqu'à un dernier front descendant d'un caractère de synchronisation.

Selon un mode de réalisation, la détection d'un caractère d'interruption est faite au moyen d'une machine d'état.

Ces objets, caractéristiques et avantages ainsi que d'autres de la présente invention seront exposés plus en détail dans la description suivante d'un exemple de réalisation d'un dispositif UART selon l'invention, faite à titre non limitatif en relation avec les figures jointes parmi lesquelles :

- la figure 1 précédemment décrite représente une trame asynchrone selon le protocole LIN,
- la figure 2 représente un organe de détection d'un caractère d'interruption,
- la figure 3 représente un caractère de synchronisation,
- la figure 4 représente un circuit de récupération d'horloge, et
- la figure 5 représente un microcontrôleur comprenant un circuit UART selon l'invention.

Comme indiqué au préambule, un caractère d'interruption BRK consiste en une suite de N bits à 0, par exemple 13 bits à 0 dans le protocole LIN auquel on se référera par la suite à titre d'exemple non limitatif. Pour tenir compte d'un décalage de fréquence entre ce signal et le signal d'horloge local, la détection de ce caractère est réalisée par l'identification d'une suite de 11 bits à 0. Le nombre de 11 bits étant défini par convention afin de tolérer une déviation d'horloge de ±15%, il est donc susceptible de modification.

La présente invention prévoit un récepteur de trames asynchrones qui devient actif sur détection d'un caractère de d'interruption BRK et qui n'attend pas de détecter un intervalle de repos ("idle") pour se connecter à chaud sur un bus de données asynchrone. Un récepteur de trame asynchrone selon l'invention comprend ainsi un organe de détection du caractère BRK.

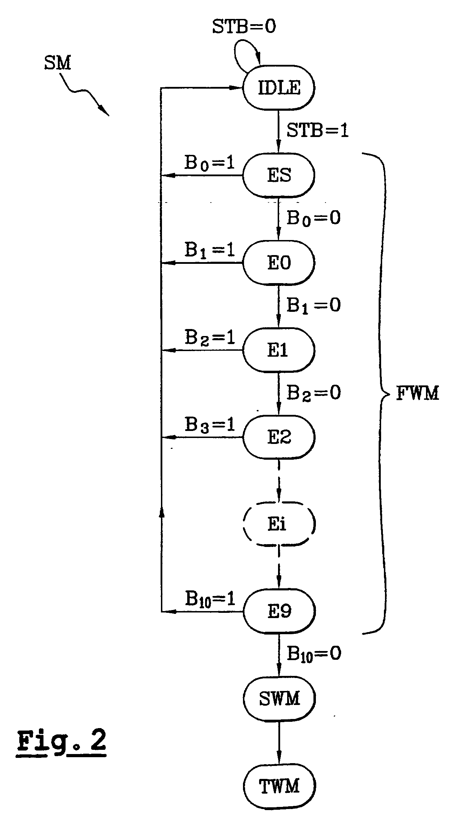

L'organe de détection du caractère BRK prend par exemple la forme d'une machine d'état SM dont un exemple de réalisation est illustré sur la figure 2. La machine d'état SM comprend au minimum deux modes de fonctionnement FWM, SWM. Le premier mode de fonctionnement FWM est un mode "recherche de caractère BRK". Le second mode de fonctionnement est un mode de fonctionnement classique "lecture de caractères" qui est commun à tous les circuits UART, comprenant la détection d'un bit de start, la détection de 8 bits de données et la détection d'un bit de stop. Des états ou étapes prévus dans le mode FWM doivent être passés avec succès pour basculer dans le second mode de fonctionnement SWM lors d'une connexion à chaud.

Dans un mode de réalisation particulier prévu en relation avec le protocole LIN, le mode de fonctionnement SWM est un mode récupération d'horloge destiné à recaler l'horloge locale grâce au caractère de synchronisation qui suit le caractère BRK. Le mode de fonctionnement SWM est alors suivi d'un troisième mode de fonctionnement TWM qui est un mode de fonctionnement classique "lecture de caractères" commun à tous les circuits UART, comprenant la détection d'un bit de start, la détection de 8 bits de données et la détection d'un bit de stop.

Le mode de fonctionnement FWM de la machine d'état SM est représenté en détail sur la figure 2. On distingue un premier état IDLE qui est un état de repos ou "attente de trame". La machine d'état SM ne quitte définitivement le mode IDLE qu'après avoir détecté un caractère BRK valide.

La réception d'un bit STB à 1 (bit STB précédant le caractère BRK, Cf. fig. 1) déclenche le passage de l'état d'attente IDLE à un état intermédiaire ES. Dans l'état ES, la réception d'un premier bit B0 à 0 déclenche le passage à un état intermédiaire E0, tandis que la réception d'un premier bit B0 à 1 fait retourner la machine d'état à l'état IDLE. La réception du bit suivant B1 selon qu'il vaut 0, respectivement 1, provoque le passage à un état intermédiaire E1, sinon le retour à l'état IDLE. Dans l'état E1, la réception du troisième bit B2, selon qu'il vaut 0, respectivement 1, provoque le passage à un état intermédiaire E2, sinon le retour à l'état IDLE.

En généralisant, la réception du $(i \cdot + 1)^{ième}$ bit dans l'état Ei, conduit à l'état Ei+1 ou à l'état IDLE selon que le bit reçu vaut 0 ou 1, respectivement.

Lorsque l'indice i vaut 9, la réception du onzième bit B10 après le bit STB, selon que le bit B10 vaut 0, respectivement 1, détermine le passage au mode de fonctionnement SWM, sinon le retour à l'état IDLE.

Dans un mode de réalisation prévu en relation avec le protocole LIN, le passage au mode de fonctionnement SWM active un circuit de récupération d'horloge décrit plus loin.

Bien entendu, le caractère d'interruption BRK peut être détecté de toute autre manière, par exemple au moyen d'un registre à décalage de 11 bits dont tous les bits font l'objet d'une opération logique ET ou encore au moyen d'un compteur ou tout autre moyen approprié.

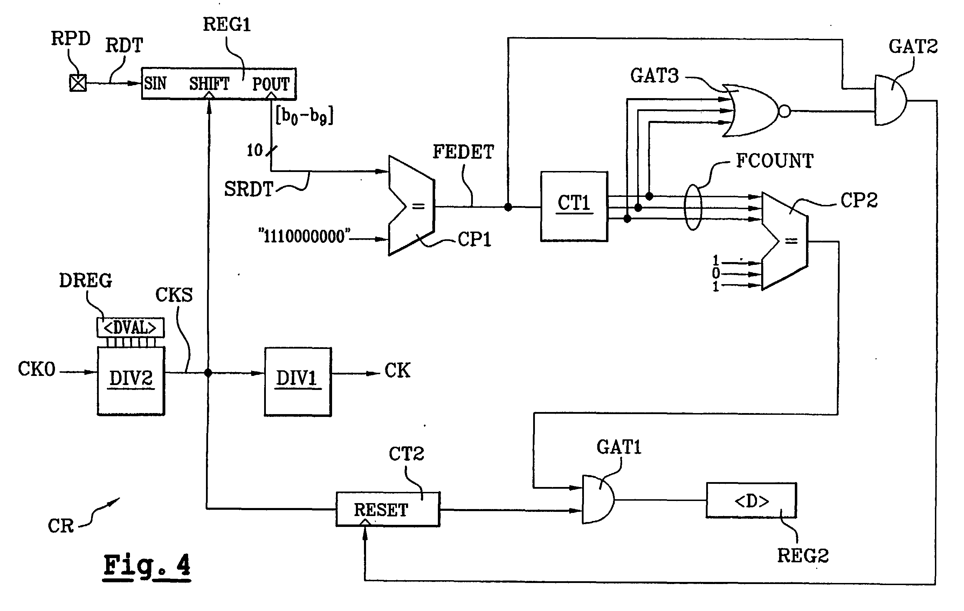

Le caractère de synchronisation SYNC selon le protocole LIN est représenté sur la figure 3 et est égal à [55]h en notation hexadécimale, soit le caractère "10101010" en binaire. Ce caractère de synchronisation est précédé d'un bit de start STB à 0 et est suivi d'un bit de stop SPB à 1.

Le caractère de synchronisation SYNC étant précédé d'un bit de start STB à 0 et suivi d'un bit de stop SPB à 1, on dispose en tout de 5 fronts descendants pour accorder un signal d'horloge local au signal d'horloge de référence du caractère SYNC. La durée D s'écoulant entre les 5 fronts descendants étant égale à 8 fois la période T du signal d'horloge de référence, la mesure de cette durée permet d'en déduire là période T du signal d'horloge de référence et d'y accorder celle du signal d'horloge local.

La figure 4 représente de façon schématique un circuit de récupération d'horloge CR permettant de synchroniser un signal d'horloge local CK sur le signal d'horloge véhiculé par le caractère de synchronisation SYNC.

Un signal d'horloge local CK est délivré par un premier diviseur DIV1, ici un diviseur par 16, recevant en entrée un signal d'échantillonnage CKS. Le signal d'échantillonnage CKS est lui-même délivré par un deuxième diviseur DIV2 programmable recevant en entrée un signal d'horloge primaire CK0. Le rapport entre la fréquence du signal CK0 et celle du signal CKS est déterminé par une valeur DVAL chargée dans un registre DREG du deuxième diviseur DIV2.

Le circuit de récupération d'horloge CR comprend en outre un registre de réception REG1, un registre d'émission REG2, deux compteurs CT1, CT2, deux comparateurs logiques CP1, CP2, deux portes logiques GAT1, GAT2 de type "ET" et une porte logique GAT3 de type "NON OU".

Le registre de réception REG1 est un registre à décalage de 10 bits dont l'entrée SHIFT est cadencée par le signal d'échantillonnage CKS. Il reçoit des données RDT sur une entrée série SIN connectée à une borne de réception de données RPD elle-même reliée à un bus de données asynchrone (non représenté). Il délivre sur une sortie parallèle POUT des données échantillonnées SRDT (bits b0 à b9).

Les données échantillonnées SRDT sont appliquées sur une entrée du premier comparateur CP1 dont l'autre entrée reçoit un nombre de référence "1110000000", formant un critère de détection de fronts descendants. Ce premier comparateur CP1 délivre un signal de détection de front descendant FEDET qui est appliqué à l'entrée du premier compteur CT1.

Le premier compteur CT1 délivre sur 3 bits un signal FCOUNT de comptage de fronts descendants qui est appliqué sur une entrée du deuxième comparateur CP2, dont l'autre entrée reçoit sous forme binaire un nombre de référence égal à 5 et dont la sortie est raccordée à une première entrée de la première porte logique GAT1.

Le deuxième compteur CT2 dénombre les impulsions du signal d'échantillonnage CKS. Son entrée de remise à zéro est reliée à la sortie de la deuxième porte logique GAT2.

La porte logique GAT2 reçoit sur une première entrée le signal de présence FEDET et sur une deuxième entrée le signal de sortie de la troisième porte logique GAT3 qui reçoit en entrées les 3 bits du signal de comptage de fronts descendants FCOUNT. Le signal de sortie de la troisième porte logique GAT3 vaut donc 1 si et seulement si le signal de comptage de fronts descendants FCOUNT vaut 0.

La première porte logique GAT1 a sa deuxième entrée reliée à la sortie du deuxième compteur CT2 et sa sortie est reliée au registre d'émission REG2 qui stocke le nombre D d'impulsions du signal d'échantillonnage survenues entre l'apparition du premier et du cinquième front descendant.

Une unité de calcul externe, par exemple l'unité centrale d'un microcontrôleur, détermine la valeur DVAL qui doit être appliquée à l'entrée du deuxième diviseur DIV2. Cette valeur est telle que la période Ts du signal d'échantillonnage CKS doit être égale à :

$$Ts = D/(8*16),$$

D étant la durée mesurée entre les cinq fronts descendants du caractère de synchronisation SYNC, soit huit périodes T de l'horloge de référence. Le calcul de DVAL peut être fait par logiciel ou par un quelconque circuit spécifique à logique câblée.

On notera ici que l'invention s'applique quelle que soit la longueur du caractère de synchronisation SYNC pourvu que celui-ci comprenne une suite alternée de 1 et de 0.

La figure 5 illustre un exemple de mise en oeuvre de la présente invention et représente schématiquement un microcontrôleur MC comprenant sur une même puce de silicium une unité centrale UC, une mémoire programme MEM, et un circuit UART selon l'invention. Le circuit UART comprend la machine d'état SM décrite plus haut et le circuit de récupération d'horloge CR également décrit plus haut. Le circuit UART est connecté à une plage d'entrée RPD du circuit intégré, pour recevoir des données asynchrones RDT, et à une plage de sortie XDT, pour émettre des données asynchrones XDT.

Il apparaîtra clairement à l'homme de l'art que la présente invention est susceptible de diverses variantes et modes de réalisation. En particulier, toute étape ou tout moyen décrit peut-être remplacé par une étape ou un moyen équivalent sans sortir du cadre de la présente invention, telle que revendiquée dans les revendications attenantes.

**Revendications**

1. Récepteur (UART) de trames asynchrones débutant par un caractère d'interruption (BRK) comportant des bits de même valeur en nombre déterminé, comprenant des moyens de connexion à chaud sur un bus de données asynchrone, **caractérisé en ce que** les moyens de connexion à chaud comprennent des moyens (SM, FWM) de détection d'un caractère d'interruption (BRK), et des moyens pour quitter un état initial de repos (IDLE) lorsqu'un caractère d'interruption a été détecté, et basculer dans au moins un mode de fonctionnement (SWM, TWM) dans lequel des caractères déterminés d'une trame asynchrone peuvent être détectés par le récepteur de trames.

2. Récepteur selon la revendication 1, prévu pour recevoir des trames asynchrones comportant après un caractère d'interruption (BRK) un caractère de synchronisation (SYNC), **caractérisé en ce qu'**il comprend des moyens (SM, SWM) pour, après détection d'un caractère d'interruption (BRK), activer un circuit (CR) de récupération d'horloge (CK) recevant en entrée le caractère de synchronisation (SYNC).

3. Récepteur selon la revendication 2, **caractérisé en ce que** le circuit de récupération d'horloge (CR) est agencé pour mesurer une période d'horloge présente dans le caractère de synchronisation (SYNC).

4. Récepteur selon la revendication 3, **caractérisé en ce que** le circuit de récupération d'horloge (CR) est agencé pour mesurer une période d'horloge à compter d'un premier front descendant suivant un caractère d'interruption (BRK) jusqu'à un dernier front descendant d'un caractère de synchronisation (SYNC).

5. Récepteur selon l'une quelconque des revendications précédentes, **caractérisé en ce que** les moyens de détection d'un caractère d'interruption (BRK) comprennent une machine d'état (SM, FWM).

6. Circuit intégré, comprenant un récepteur de trames asynchrones selon l'une quelconque des revendications 1 à 5.

7. Microcontrôleur (MC), comprenant un récepteur de trames asynchrones selon l'une quelconque des revendications 1 à 5.

8. Procédé de connexion à chaud, sur un bus de données asynchrone, d'un récepteur (UART) de trames asynchrones débutant par un caractère d'interruption (BRK) comportant des bits de même valeur en nombre déterminé, **caractérisé en ce qu'**il comprend les étapes consistant à :

   - placer le récepteur de trame dans un état initial de repos (IDLE),
   - rechercher (SM, FWM) un caractère d'interruption (BRK) au moyen du récepteur de trame, et
   - lorsqu'un caractère d'interruption (BRK) est détecté, faire basculer le récepteur dans au moins un mode de fonctionnement (SWM, TWM) dans lequel des caractères déterminés d'une trame asynchrone peuvent être détectés par le récepteur.

9. Procédé selon la revendication 8, dans lequel des trames asynchrones comportent après un caractère d'interruption (BRK) un caractère de synchronisation (SYNC), **caractérisé en ce qu'**il comprend une étape (SWM) de récupération d'horloge (CK) sur réception d'un caractère de synchronisation (SYNC).

10. Procédé selon la revendication 9, dans lequel l'étape de récupération d'horloge comprend la mesure d'une période d'horloge présente dans le caractère de synchronisation (SYNC).

11. Procédé selon la revendication 10, dans lequel la mesure d'une période d'horloge est faite à compter d'un premier front descendant suivant un caractère d'interruption (BRK) jusqu'à un dernier front descendant d'un caractère de synchronisation (SYNC).

12. Procédé selon l'une quelconque des revendications précédentes, **caractérisé en ce que** la détection d'un caractère d'interruption (BRK) est faite au moyen d'une machine d'état (SM, FWM).

**Claims**

1. An asynchronous frame receiver (UART) starting with a break character (BRK) comprising a determined number of bits of the same value, including means for hot-plugging onto an asynchronous data bus, **characterised in that** the hot-plugging means include means (SM, FWM) for detecting a break character (BRK), and means for leaving an initial idle state (IDLE) when a break character has been detected, and switching to at least one operating mode (SWM, TWM) in which determined characters of an asynchronous frame can be detected by the frame receiver.

2. Receiver according to claim 1, provided for receiving asynchronous frames containing a synchronisation character (SYNC) after a break character (BRK), **characterised in that** it includes means (SM, SWM) for activating, after detecting a break character (BRK), a clock (CK) recovery circuit (CR) receiving the synchronisation character (SYNC) at input.

3. Receiver according to claim 2, **characterised in that** the clock recovery circuit (CR) is arranged to measure a clock period present in the synchronisation character (SYNC).

4. Receiver according to claim 3, **characterised in that** the clock recovery circuit (CR) is arranged to measure a clock period from a first falling edge after a break character (BRK) to a last falling edge of a synchronisation character (SYNC).

5. Receiver according to any one of the preceding claims, **characterised in that** the means for detecting a break character (BRK) comprise a state machine (SM, FWM).

6. An integrated circuit, comprising an asynchronous frame receiver according to any one of claims 1 to 5.

7. A microcontroller (MC), comprising an asynchronous frame receiver according to any one of claims 1 to 5.

8. A method for hot-plugging, onto an asynchronous data bus, an asynchronous frame receiver (UART) starting with a break character (BRK) comprising a determined number of bits of the same value, **characterised in that** it comprises the steps of:

   - setting the frame receiver to an initial idle state (IDLE),
   - searching (SM, FWM) for a break character (BRK) by means of the frame receiver, and
   - when a break character (BRK) is detected, switching the receiver to at least one operating mode (SWM, TWM) in which determined characters of an asynchronous frame can be detected by the receiver.

9. Method according to claim 8, in which asynchronous frames comprise a synchronisation character (SYNC) after a break character (BRK), **character-** **ised in that** it comprises a clock (CK) recovery step (SWM) upon receiving a synchronisation character (SYNC).

10. Method according to claim 9, in which the clock recovery step includes measuring a clock period present in the synchronisation character (SYNC).

11. Method according to claim 10, in which a clock period is measured from a first falling edge after a break character (BRK) to a last falling edge of a synchronisation character (SYNC).

12. Method according to any one of the preceding claims, **characterised in that** a break character (BRK) is detected by means of a state machine (SM, FWM).

**Patentansprüche**

1. Empfänger (UART) von asynchronen Rastern, beginnend mit einem Unterbrechungszeichen (BRK), das Bits mit demselben Wert in einer bestimmten Anzahl enthält, umfassend Mittel für den Heißanschluss an einen asynchronen Datenbus, **dadurch gekennzeichnet, dass** die Heißanschlussmittel Mittel (SM, FWM) zur Erfassung eines Unterbrechungszeichens (BRK) und Mittel zum Aufgeben eines ursprünglichen Ruhezustandes (IDLE), wenn ein Unterbrechungszeichen erfasst wurde, und zum Kippen in mindestens eine Betriebsart (SWM, TWM) umfassen, in der bestimmte Zeichen eines asynchronen Rasters von dem Rasterempfänger erfasst werden können.

2. Empfänger nach Anspruch 1, der dazu vorgesehen ist, asynchrone Raster zu empfangen, die nach einem Unterbrechungszeichen (BRK) ein Synchronisationszeichen (SYNC) umfassen, **dadurch gekennzeichnet, dass** er Mittel (SM, SWM) umfasst, um nach Erfassen eines Unterbrechungszeichens (BRK) eine Schaltung (CR) zur Taktgewinnung (CK) zu aktivieren, die am Eingang das Synchronisationszeichen (SYNC) empfängt.

3. Empfänger nach Anspruch 2, **dadurch gekennzeichnet, dass** die Schaltung zur Taktgewinnung (CR) derart angeordnet ist, dass sie eine Taktperiode misst, die in dem Synchronisationszeichen (SYNC) vorhanden ist.

4. Empfänger nach Anspruch 3, **dadurch gekennzeichnet, dass** die Schaltung zur Taktgewinnung (CR) derart angeordnet ist, dass sie eine Taktperiode ab einer ersten absteigenden Front nach einem Unterbrechungszeichen (BRK) bis zu einer letzten absteigenden Front eines Synchronisationszeichens (SYNC) misst.

5. Empfänger nach einem der vorhergehenden Ansprüche, **dadurch gekennzeichnet, dass** die Mittel zur Erfassung eines Unterbrechungszeichens (BRK) eine Zustandsmaschine (SM, FWM) umfassen.

6. Integrierte Schaltung, umfassend einen Empfänger von asynchronen Rastern nach einem der Ansprüche 1 bis 5.

7. Mikrokontroller (MC), umfassend einen Empfänger von asynchronen Rastern nach einem der Ansprüche 1 bis 5.

8. Verfahren für den Heißanschluss an einen asynchronen Datenbus für einen Empfänger (UART) von asynchronen Rastern, beginnend mit einem Unterbrechungszeichen (BRK), umfassend Bits mit demselben Wert in bestimmter Anzahl, **dadurch gekennzeichnet, dass** es die folgenden Schritte umfasst, darin bestehend:

   - den Rasterempfänger in einen ursprünglichen Ruhezustand (IDLE) zu versetzen,
   - ein Unterbrechungszeichen (BRK) mittels des Rasterempfängers zu suchen (SM, FWM), und
   - wenn ein Unterbrechungszeichen (BRK) erfasst ist, den Empfänger in mindestens eine Betriebsart (SWM, TWM) zu kippen, in der bestimmte Zeichen eines asynchronen Rasters vom Empfänger erfasst werden können.

9. Verfahren nach Anspruch 8, bei dem asynchrone Raster nach einem Unterbrechungszeichen (BRK) ein Synchronisationszeichen (SYNC) umfassen, **dadurch gekennzeichnet, dass** es einen Schritt (SWM) der Taktgewinnung (CK) bei Empfang eines Synchronisationszeichens (SYNC) umfasst.

10. Verfahren nach Anspruch 9, bei dem der Schritt der Taktgewinnung das Messen einer Taktperiode umfasst, die in dem Synchronisationszeichen (SYNC) vorhanden ist.

11. Verfahren nach Anspruch 10, bei dem das Messen einer Taktperiode ab einer ersten absteigenden Front nach einem Unterbrechungszeichen (BRK) bis zu einer letzten absteigenden Front eines Synchronisationszeichens (SYNC) erfolgt.

12. Verfahren nach einem der vorhergehenden Ansprüche, **dadurch gekennzeichnet, dass** die Erfassung eines Unterbrechungszeichens (BRK) mittels einer Zustandsmaschine (SM, FWM) erfolgt.

**Fig. 1**

**Fig. 3**

**Fig. 5**

8

STB=0

IDLE

STB=1

$B_0=1$    ES

$B_0=0$

$B_1=1$    E0

$B_1=0$

$B_2=1$    E1

$B_2=0$

$B_3=1$    E2

Ei

$B_{10}=1$    E9

$B_{10}=0$

FWM

SWM

TWM

SM

**Fig. 2**

**Fig. 4**